# EUROPEAN PATENT APPLICATION

(11) **EP 1 522 215 A1**
(43) Date of publication of application: **13.04.2005**
(21) Application number: 04380202.4
(22) Date of filing: 07.10.2004
(51) Int. Cl.: A01D 75/28, B60G 17/005

(54) **Levelling-compensating system for harvesters and the like**

(30) Priority: 08.10.2003 ES 200302337
(71) Applicant: Irujo Lopez, Angel Carlos, 31251 Larraga (Navarra) (ES)
(72) Inventor: Irujo Lopez, Angel Carlos, 31251 Larraga (Navarra) (ES)
(74) Representative: Maldonado Jordan, Julia

(57) **Abstract**

A leveling-compensating system for harvesters and the like, applicable in machines provided with a wheel axle (1) arranged in a pivotal linkage assembly with regard to the body (3) of the machine, linear actuators (6) being incorporated between the pivotal shaft (1) and the body (3) of the machine, by means of which it is possible to make the relative position of the body (3) of the machine vary towards the vertical position in order to compensate the load of the weight on the wheels of both sides on inclined terrains.

## Description

### Field of the Art

The present invention relates to the adaptation of machines that work in the field, such as harvesters, to determine a compensation leveling with regard to inclinations or unevenness of the terrain on which the working action is developed.

### State of the Art

Due to the great length of the cutting devices with which harvesters are built, inclinations which the operating terrain may greatly affect the conditions for carrying out the work, since the height with regard to the ground may substantially vary from one end of the cutting device to the other.

To solve the drawback, there are self-leveling systems which can be manually or automatically controlled, by means of which the inclination of the cutting device varies through actuator cylinders or similar solutions, according to the terrain.

These systems correct the position of the cutting device to locate it parallel to the terrain, but do not compensate the position of the machine which, when tilted sideways while it works, determines an overload on the wheels running along the lower area, which can cause dangerous sliding of the machine, inasmuch as said wheels of the lower area undergo a stress which increases the wear thereof and which can cause tire blowouts with the danger of overturning the machine.

A solution which is applied on the front drive shaft of the machine is also known, having the reducers of attachment of the wheels to said shaft in the form of equalizing bars by means of which an inclination affecting the machine assembly can be regulated. This solution compensates the loads caused by the weight of the machine, but it is a very complex and costly solution.

### Object of the Invention

According to the invention, a system of great simplicity of application is proposed, whereby a leveling and compensating function is obtained in the corresponding machine in a very advantageous manner.

This system object of the invention is applied on the rear shaft of harvesters, which is arranged in a pivotal linkage assembly, incorporating actuator means between said shaft and the structure of the machine, capable of making the shaft pivot in a variable relative inclination with regard to the machine.

The pivoting means of the shaft consists of at least one linear actuator, such as a hydraulic cylinder or the like, the arrangement of two actuators of this type incorporated with regard to respective end areas of the shaft preferably being provided.

Said actuators can be manually controlled by means of a control from the machine operator position, or automatically, by means of laser detectors, sensing devices, etc., which generate signals capable of determining the operating of the actuators according to the position of the machine on the terrain with regard to the horizontal position. In any case, the system can be actuated or deactivated by means of a control, such that in the deactivated position, the shaft of the machine floats with regard to the linkage assembly on the machine.

Particularly with regard to the system, safety is furthermore provided such that the actuation of the pivoting actuators of the rear shaft of the machine is only possible when the machine is in working conditions, but not when it is in running conditions.

A simple, reliable and lower cost system is thus obtained, which can be incorporated in machines of any type provided with a pivotal wheel axle, such as in harvesters and other agricultural machines or public works machines which are used in the field, the system being applicable both in new machines and in old machines which are already being used.

This system is furthermore compatible with the known self-leveling systems of the cutting device of harvesters, such that the same harvester can coexist with both systems, their effects complementing one another for a better functional behavior of the machine.

Due to all this, said system of the invention certainly has some very advantageous features, obtaining its own life and preferred character for the functional application for which it is intended.

### Description of the Drawings

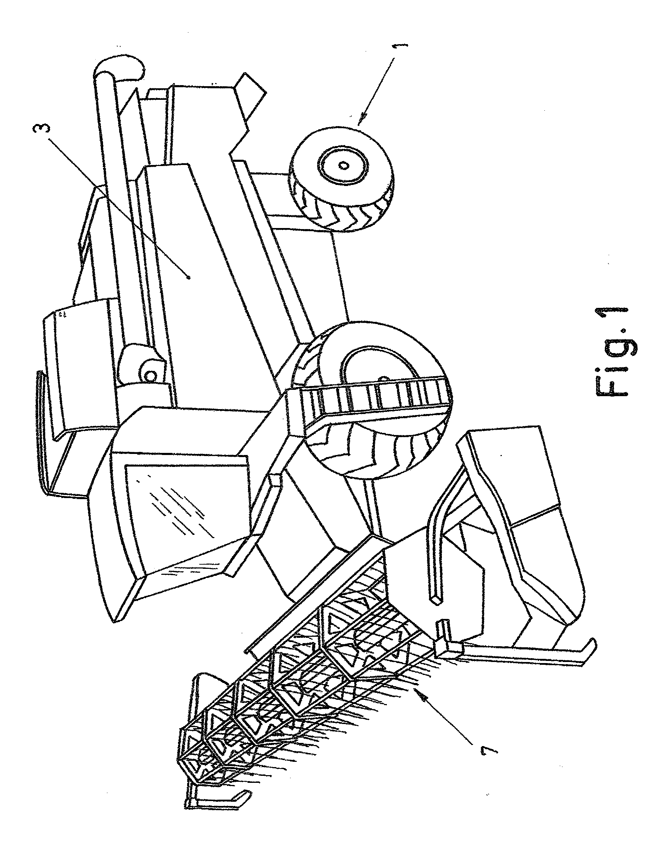

Figure 1 shows a perspective view of a standard harvester, in which the system of the invention is applicable.
Figure 2 shows a schematic view of the rear portion of a harvester provided with the system of the invention.
Figure 3 shows a schematic view of the normal position of a harvester working while tilted sideways without load compensation.
Figure 4 shows a schematic view like the previous one with the machine being compensated according to the system of the invention.
Figure 5 shows a schematic view like the previous ones, with the machine taken to a vertical position beyond the compensation.
Figure 6 shows a schematic view of the functional hydraulic assembly of the proposed system.
Figure 7 shows a schematic view of the electric control assembly of the proposed system in a manual operating version.
Figure 8 shows a schematic view of the electric control assembly of the proposed system in a selective manual operating or automatic operating version.

### Detailed Description of the Invention

The object of the invention refers to a system intended for leveling and compensating the position of harvesters or other similar machines when, due to the layout of the terrain, they have to work tilted sideways with the drawbacks this implies.

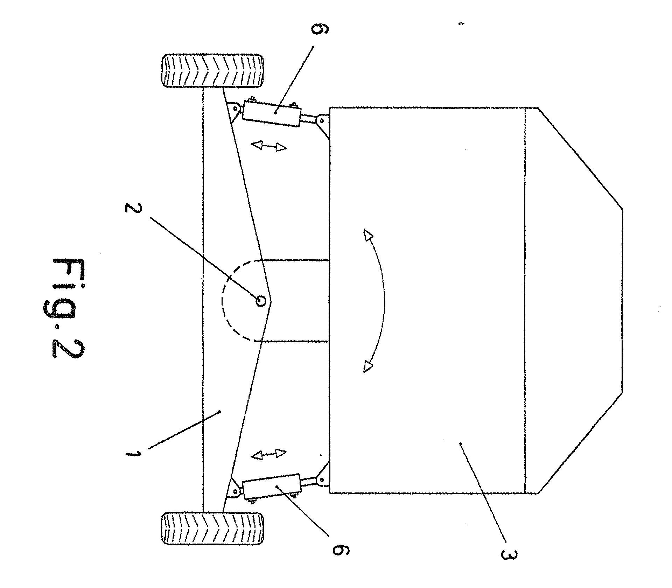

The system which is proposed is mainly provided for harvesters, but it is generally applicable for any type of machines provided with a wheel axle (1) incorporated in pivotal assembly by means of a linkage (2) with regard to the body (3) of the corresponding machine, as is the rear shaft of harvesters, as is shown in Figure 2.

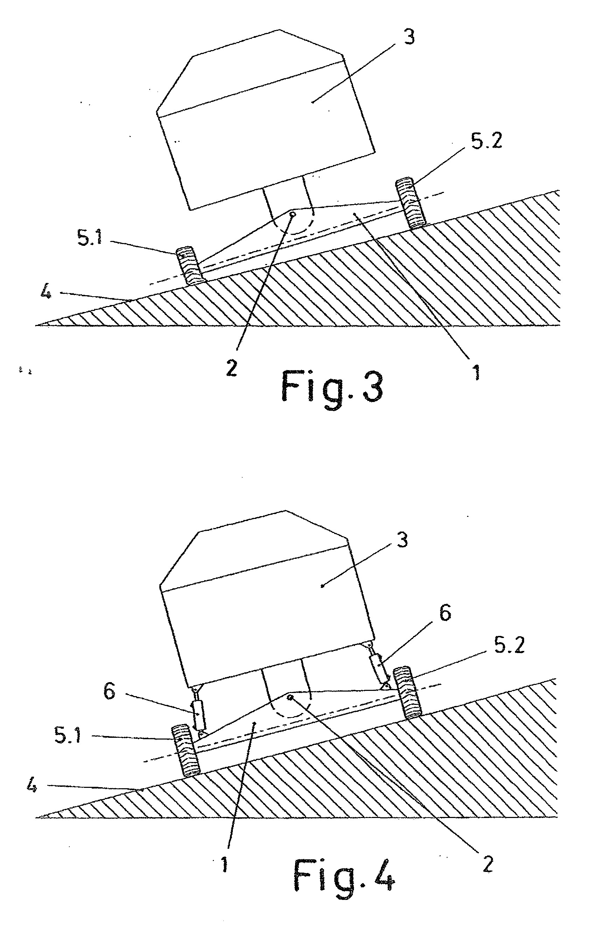

When a harvester or another machine with similar features works along an inclined terrain (4), this determines an overload on the wheels (5.1) running along the lower area due to the weight of the body (3) of the machine, such that said wheels (5.1) become laterally deformed in the support, as Figure 3 shows, thereby decreasing the height of the center of said wheels (5.1), whereby the shaft (1) is inclined with regard to the supporting terrain (4).

In these circumstances, the wheels (5.1) undergo a more pronounced wear than in normal conditions and in addition to working deformed, their adherence to the ground decreases, sliding of the machine being able to occur, as well as tire blowouts of said wheels (5.1), with the danger of overturning the machine.

The overload on the lower wheels (5.1) in said circumstances is due to the side component of the weight of the body (3) of the machine due to the inclined position thereof, such that by lifting said body (3) towards the vertical position, said side component of the weight decreases, the overload on the wheels (5.1) of the lower area being reduced.

In this respect, according to the system of the invention, an actuator means capable of varying the relative position of the body (3) with regard to the shaft (1) towards the vertical position, is incorporated between the pivotal shaft (1) and the body (3) of the machine.

To that end, at least one linear actuator (6), of the type of a hydraulic cylinder or the like, is incorporated between the pivotal shaft (1) and the body (3) of the machine. As a preferable solution, but without a limiting character, a practical embodiment with two antagonistically acting linear actuators (6) respectively incorporated between the corresponding halves of the pivotal shaft (1) and the body (3) of the machine, as Figure 2 shows, is provided.

In these conditions, when the machine works along an inclined terrain (4), the relative position of the body (3) can be varied, by means of the linear actuators (6) incorporated between the pivotal shaft (1) and the body (3) of the machine, by lifting it towards the vertical position, whereby the load on the wheels (5.1) supported in the lower area is reduced, thereby achieving that said lower wheels (5.1) work in the same load conditions as the wheels (5.2) of the upper area, and therefore without deformation, as Figure 4 shows.

A compensation of the weight of the body (3) of the machine is thus achieved in a balanced distribution of the load of said weight between the wheels (5.1) running along the lower area of the inclined terrain (4) and the wheels (5.2) running along the upper area, preventing the problems of overload on the lower wheels (5.1), whereby the machine works in much more favorable conditions, achieving greater yield, while at the same time the risks of breakdowns and possible accidents due to overturning are reduced.

On the other hand, the balance between the assembly of the rear wheels (5.1 and 5.2) makes the shaft (1) recover the parallelism with regard to the ground, whereby said rear wheels (5.1-5.2), which are the drive wheels, are perfectly aligned with the front wheels of the machine, the wheel alignment deviations and the problems that the misalignment creates for controlling the steering due to the swinging of the machine being eliminated.

The compensation of the machine also aids in balancing the leveling of the cutting device (7) with regard to the ground (4) on which the work is carried out; the proposed compensating system being able to coexist with other known systems for self-leveling of the cutting device, for greater effectiveness of adapting the machine as a whole to the conditions in which it must work.

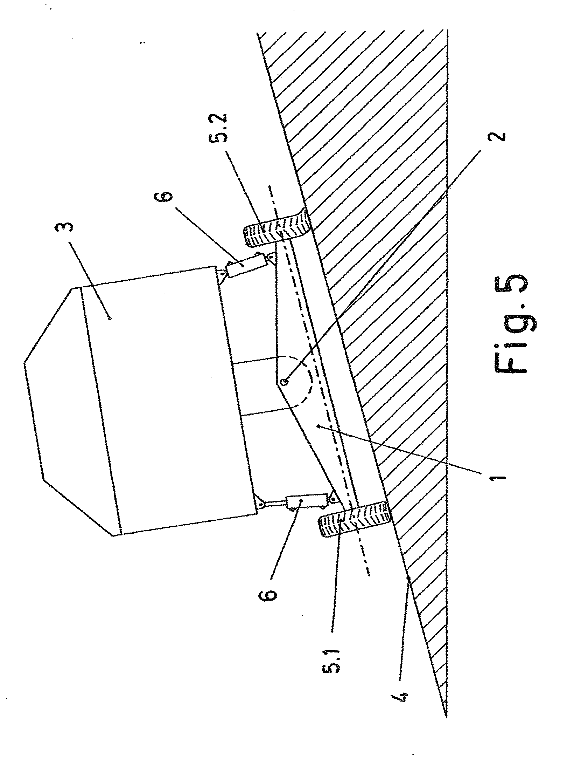

With the load compensation system object of the invention, the compensation point in lifting the body (3) of the machine towards the vertical position can even be surpassed, determining an opposite effect of the overload, i.e., the overload is applied on the wheels (5.2) running along the upper area on the inclined terrain (4), as Figure 5 shows, which can be advantageous when the body (3) of the machine contains a heavy load, as is the case when the hopper containing the harvest is full, the filling of said hopper therefore being able to be completed on any terrain.

The behavior of the load compensation system is based on a functional hydraulic system, which is controlled by means of an electric control system, including two selective positions, working and running, respectively, in the first of which positions, the load compensation system is active, the operating of the actuators (6) to pivot the body (3) of the machine on the shaft (1) to the left or to the right, according to necessity, being able to be selected, whereas in the running position (for moving the machine without working), the load compensation system is deactivated and therefore the body (3) of the machine floats on the shaft (1) as in standard machines.

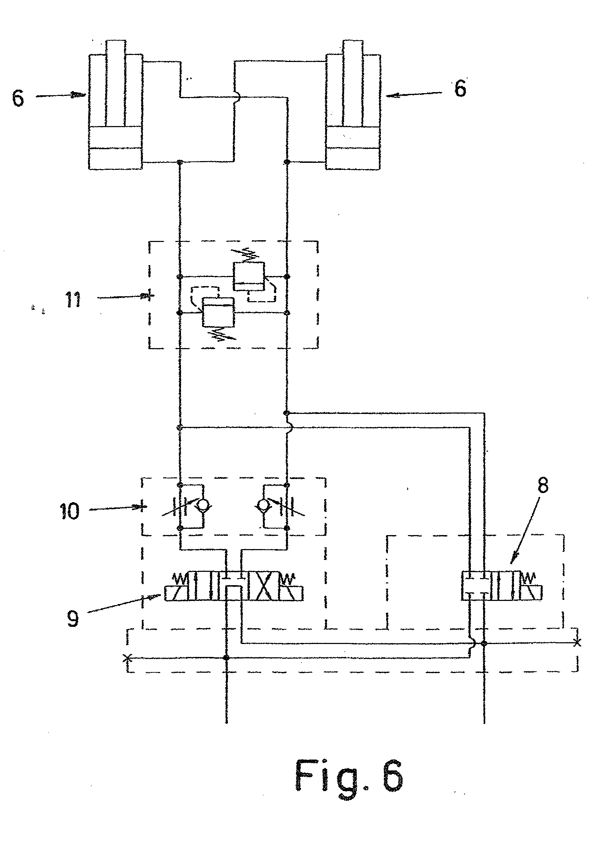

The functional hydraulic assembly of the system (see Figure 6) comprises a regulator (8) by means of which the working and running positions are selected, whereas another regulator (9) selects the operation of the actuators (6) to determine the relative inclination of the body (3) of the machine applicable to the left or to the right.

A double choke (10) is included in the communication circuit between the regulator (9) and the actuators (6) to regulate the pressure of the fluid in the respective conduits towards the actuators (6), a double compensating valve (11) also being in this same circuit to regulate the bypass of the pressure fluid flow rate in reverse combination between the inputs and outputs of the actuators (6).

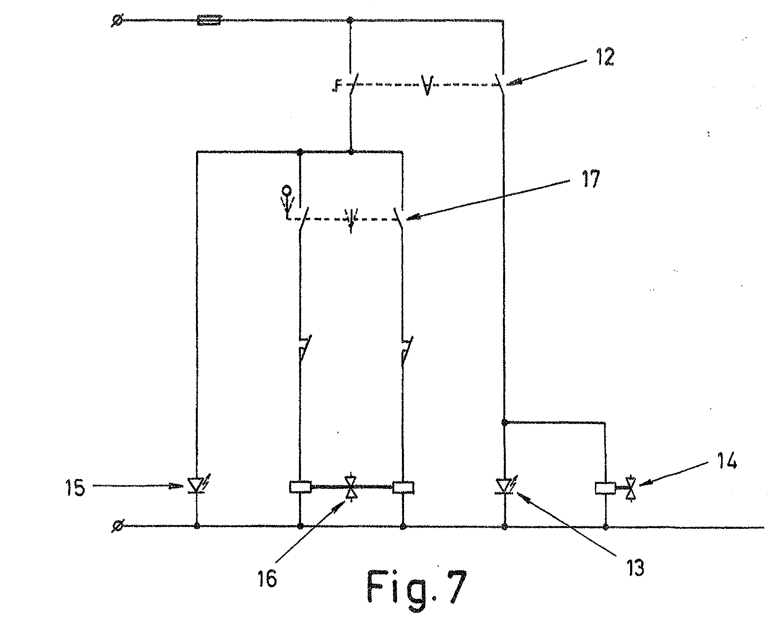

The electric control assembly (see Figure 7) comprises a selector control (12) which enables establishing the working and running positions, taking said control towards the left or towards the right, respectively, according to the representation of the diagram, such that when the running position is selected, closing the circuit on the right side of the diagram with said control (12), a light indicator (13) which is green, lights up, and at the same time a solenoid valve (14) which gives way to the regulator (8) of the hydraulic assembly is activated, whereas when the working position is selected, closing the circuit on the left side of the diagram with the control (12), a light indicator (15) which is red, lights up, and at the same time a circuit is connected in which there is a by-pass solenoid valve (16) towards the regulator (9) of the hydraulic assembly.

Said solenoid valve (16) circuit contains a selector (17) by means of which the closing of the circuit can be determined on the left or on the right, respectively, whereby the regulator (9) adopts either position so that the operating of the actuators (6) makes the body (3) of the machine of application tilt towards either side.

The electric control assembly according to Figure 7 is provided for a completely manual control, such that the operator of the machine of application has to select the working or running position by means of the control (12), and in the state of the working position, he has to in turn select the operating of the actuators (6), by means of the control (17), to make the body (3) of the machine tilt towards either side.

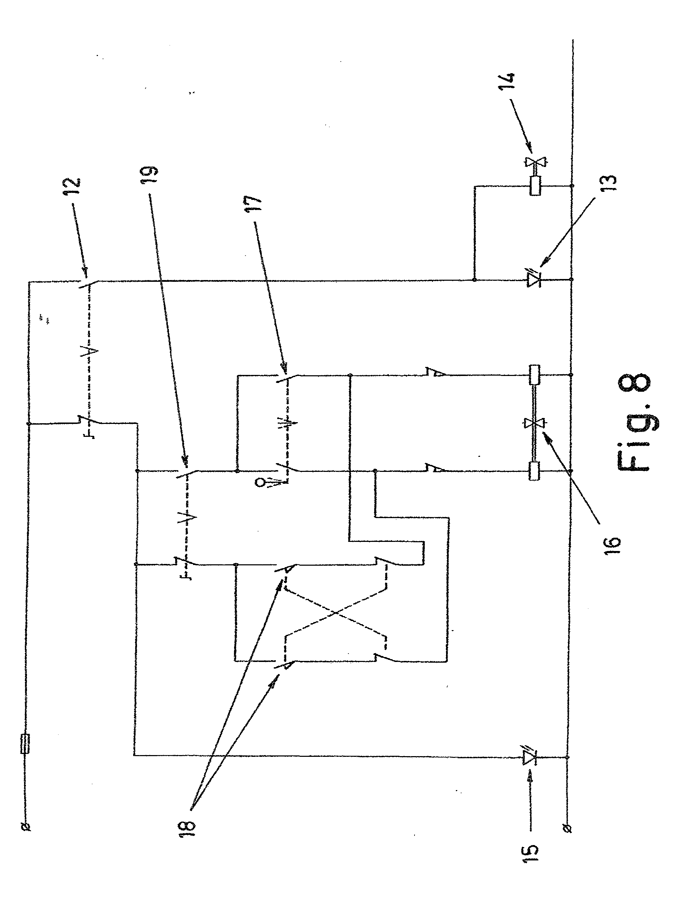

According to a practical embodiment variant, shown in Figure 8, the electric assembly can include an automatic control complement for operating the actuators (6), to make the body (3) of the machine of application tilt according to the position thereof while carrying out the works, a complementary circuit being included to that end in the electrical circuit, provided with automatically acting microswitches (18) according to an established pre-selection of the position of the machine, in order to open or close the solenoid valve (16) circuit on either side.

Said complementary automatic control circuit is connected through a selector (19), by means of which a closed position of the connection of said complementary automatic control circuit or an opening position of said connection and the closing for its part of the connection of normal manual control circuit by means of control (17), can be determined.

In this case the operator of the machine can select the working or running position by means of control (12), and in the working position state, he can select the possibility of automatic or manual control by means of control (19), such that in the automatic control position, the operating of the actuators (6) is automatically controlled by means of microswitches (18) according to the position of the machine, whereas in the manual control position, it is the operator himself who must carry out said control by means of control (17).

In any case, with regard to the functional assembly for operating the actuators (6), certain safety means are provided, for the purpose of being able to activate said operating of the actuators (6) only in the working arrangement of the machine, preventing this activation from being able to accidentally occur in the running arrangement, generating problems.

In the case of harvesters, said safety means can be detectors which only allow for the activation of the operating of the actuators (6) when the cutting device (7) of the machine is coupled and in the low position. The safety means can likewise be of any other type which carries out the same function, such as sensors connected with the gear change system, so that the activation of the actuators (6) can only start operating with the working speeds of the machine.

## Claims

1. A leveling-compensating system for harvesters and the like, applicable in machines provided with a wheel axle (1) arranged in a pivotal linkage assembly with regard to the body (3) of the machine, **characterized in that** at least one actuator means (6) capable of making the relative position of the body (3) vary with regard to the shaft (1) is incorporated between the pivotal shaft (1) and the body (3) of the machine in order to bring said body (3) towards the vertical position when the shaft (1) rests on a ground (4) that tilts sideways.

2. A leveling-compensating system for harvesters and the like according to claim 1 in its entirety, **characterized in that** the actuator means (6) is constituted of hydraulic cylinder type linear actuators or the like, preferably having two actuators (6) incorporated between the respective halves of the pivotal shaft (1) and the body (3) of the machine.

3. A leveling-compensating system for harvesters and the like according to claims 1 and 2 in their entirety, **characterized in that** the operating of the actuators (6) is carried out through a hydraulic system connected with an electric control system, comprising a selector (12) which enables determining a deactivated position of the system for the operating of the machine in running, and an active position for the operating of the system when the machine operates in the working action.

4. A leveling-compensating system for harvesters and the like according to claim 3 in its entirety, **characterized in that** an automatic control complement is included in the control system by means of microswitches (18), the connection of said complement being established through a selector (19) which enables selecting the connection between an automatic control position and a manual control position through a selector (17).

5. A leveling-compensating system for harvesters and the like according to claims 1 to 4 in their entirety, **characterized in that** the functional assembly for operating the actuators (6) is provided for with the safety means which only allow functional activity of said operating of the actuators (6) when the machine is in a working arrangement.
